(19) Europäisches Patentamt
European Patent Office
Office européen des brevets

(11) EP 0 515 879 B1

(12) # EUROPÄISCHE PATENTSCHRIFT

(45) Veröffentlichungstag und Bekanntmachung des Hinweises auf die Patenterteilung:
**28.02.1996 Patentblatt 1996/09**

(51) Int Cl.$^6$: **C08F 297/08**

(21) Anmeldenummer: **92107754.1**

(22) Anmeldetag: **08.05.1992**

(54) **Propylen-Ethylen-Copolymerisate aus drei verschiedenen Bestandteilen**

Propylene ethylene copolymers from three different constituents

Copolymères propylène-éthylène de trois constituants différents

(84) Benannte Vertragsstaaten:
**BE DE ES FR GB IT NL**

(30) Priorität: **31.05.1991 DE 4117842**

(43) Veröffentlichungstag der Anmeldung:
**02.12.1992 Patentblatt 1992/49**

(73) Patentinhaber: **BASF Aktiengesellschaft**
**D-67063 Ludwigshafen (DE)**

(72) Erfinder:
- **Schwager, Harald, Dr.**
  **W-6720 Speyer (DE)**
- **Kerth, Juergen, Dr.**
  **W-6719 Carlsberg (DE)**

(56) Entgegenhaltungen:
**EP-A- 0 131 268** **EP-A- 0 276 734**
**EP-A- 0 383 099** **AU-A- 599 201**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 515 879 B1

Printed by Jouve, 75001 PARIS (FR)

## Beschreibung

Die vorliegende Erfindung betrifft Propylen-Ethylen-Copolymerisate, erhältlich durch dreistufige Polymerisation aus der Gasphase heraus in einem bewegten Festbett, mittels eines Ziegler-Natta-Katalysatorsystems, das neben einer titanhaltigen Feststoffkomponente noch als Cokatalysator eine Aluminiumverbindung enthält, wobei man

in einer ersten Polymerisationsstufe bei einem Druck von 20 bis 40 bar, einer Temperatur von 60 bis 90°C und einer mittleren Verweilzeit des Reaktionsgemisches von 0,5 bis 5 Stunden Propylen polymerisiert, danach

in einer zweiten Polymerisationsstufe bei einem Druck von 5 bis 30 bar, wobei dieser Druck wenigstens 7 bar unter dem Druck der ersten Polymerisationsstufe liegt, einer Temperatur von 40 bis 110°C und einer mittleren Verweilzeit des Reaktionsgemisches von 0,2 bis 4 Stunden dem aus der ersten Polymerisationsstufe erhaltenen Polymerisat ein Gemisch aus Propylen und Ethylen hinzupolymerisiert, und anschließend

in einer dritten Polymerisationsstufe bei einem Druck von 5 bis 30 bar, einer Temperatur von 40 bis 110°C und einer mittleren Verweilzeit des Reaktionsgemisches von 0, 1 bis 5 Stunden dem aus der zweiten Polymerisationsstufe erhaltenen Polymerisat Ethylen oder ein Gemisch aus Ethylen und Propylen hinzupolymerisiert,

dabei das Gewichtsverhältnis zwischen den in der ersten und den in der zweiten Polymerisationsstufe umgesetzten Monomeren auf 1:1 bis 20:1 und das Gewichtsverhältnis zwischen den in den beiden ersten Polymerisationsstufen und den in der dritten Polymerisationsstufe umgesetzten Monomeren auf 1:2 bis 20:1 einstellt.

Außerdem betrifft die Erfindung ein Verfahren zur Herstellung dieser Propylen-Ethylen-Copolymerisate sowie Folien und Formkörper aus diesen Copolymerisaten.

Durch Polymerisation an Ziegler-Natta-Katalysatoren erhältliche Propylen-Ethylen-Copolymerisate sind bereits in einer Reihe von Patentschriften beschrieben worden. Aus der US-A 4 260 710 ist bekannt, Homo- und Copolymerisate von Alk-1-enen durch Polymerisation mit Hilfe von Ziegler-Natta-Katalysatoren in einem Rührkessel herzustellen. Die dabei verwendeten Katalysatorkomponenten enthalten u.a. Verbindungen des mehrwertigen Titans, Aluminiumhalogenide und/oder -alkyle, sowie Elektronendonorverbindungen, wobei meistens Silane, Ester, Ether, Ketone oder Lactone verwendet werden (EP-B 14 523, EP-B 45 977, EP-B 86 473, EP-A 171 200, US-A 4 857 613).

Des weiteren sind eine Reihe von Verfahren zur Darstellung von Propylen-Ethylen-Blockcopolymeren mit Hilfe eines Ziegler-Natta-Katalysatorsystems bekannt (US-A 4 454 299, US-A 4 455 405, ZA-B 0084/3561, ZA-B 0084/3563, ZA-B 0084/5261, GB-B 1 032 945), bei denen man zunächst gasförmiges Propylen in einer ersten Reaktionsstufe polymerisiert und das daraus erhältliche Homopolymerisat anschließend in eine zweite Reaktionsstufe bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Die dabei erhältlichen Copolymerisate weisen meist eine ausgezeichnete Schlagzähigkeit, zugleich aber neben einer verringerten Steifigkeit auch eine relativ hohe Neigung zum Weißbruch auf. Unter Weißbruch versteht man dabei die an vielen Kunststoffen während der Verstreckung auftretende Weißfärbung der vorher transparenten Probe in einzelnen Bereichen.

Eine Kombination unterschiedlicher mechanischer Eigenschaften, insbesondere einer hohen Schlagzähigkeit bei noch ausreichend hoher Steifigkeit, läßt sich insbesondere bei Polymermischungen, den sogenannten "Blends" beobachten. So lassen sich beispielsweise die Eigenschaften von harten, temperaturbeständigen Polymeren mit denen von weichen, elastischen Polymeren durch Vermischen derart verknüpfen, daß die dabei erhältlichen "Blends" eine vorteilhafte Kombination der guten Eigenschaften beider Polymerisate darstellen (Saechtling, Kunststoff-Taschenbuch, Carl Hanser-Verlag, München, Seite 8 [1986]).

Aus den älteren Anmeldungen DE-A 40 19 455 und DE-A 40 19 456 sind beispielsweise "Blends" aus verschiedenartigen Polyolefinen bekannt, welche neben einer hohen Schlagzähigkeit, eine hohe Steifigkeit und eine niedrige Neigung zum Weißbruch aufweisen. Derartige "Blends" werden durch Vermischen von bestimmten Propylencopolymerisaten, die ihrerseits aus Propylenhomopolymerisaten und statistischen Propylencopolymerisaten bestehen, mit Polyethylenen erhalten. Die Herstellung dieser "Blends" ist aber technisch relativ aufwendig. Zunächst ist es dabei erforderlich, Propylencopolymerisate nach einem zweistufigen Verfahren herzustellen, wobei man in einer ersten Polymerisationsstufe Propylen polymerisiert und dem daraus erhaltenen Propylenpolymerisat in einer zweiten Polymerisationsstufe anschließend ein Gemisch aus Propylen und Ethylen hinzupolymerisiert. merisiert. Unabhängig davon wird in einem weiteren Verfahrensschritt ein Polyethylen mit einer bestimmten Dichte hergestellt. Die auf diese Weise erhaltenen Polymerisate, das Propylencopolymerisat und das Polyethylen, werden anschließend üblicherweise in einem Extruder miteinander vermischt. Dieses Herstellungsverfahren liefert Produkte mit guten anwendungstechnischen Eigenschaften, erfordert aber neben den eigentlichen Polymerisationsschritten noch einen zusätzlichen Vermischungsschritt, was zu Schwierigkeiten bezüglich der zeitlichen Abstimmung der einzelnen Herstellungsschritte und zu einem apparativen Mehraufwand des Verfahrens führt.

Weiterhin wird in der EP-A 276 734 ein Verfahren zur Herstellung von Propylen-Ethylen-Polymerisaten in einer V-Kaskade beschriebene, wobei zunächst parallel Propylen und Ethylen in zwei verschiedenen Polymerisationszonen homopolymerisiert werden. Die dabei erhaltenen Polymerisate werden anschließend ieweils aetrennt voneinander in eine weitere Polvmerisationszone eingeführt, wo ein Gemisch aus Propylen und Ethylen copolymerisiert wird. Die dabei

erhaltene Mischung enthält u.a. ein Ethylenhomopolymerisat.

Der vorliegenden Erfindung lag daher die Aufgabe zugrunde, den geschilderten Nachteilen abzuhelfen und Propylen-Ethylen-Copolymerisate mit guten anwendungstechnischen Eigenschaften zu entwickeln, die auf möglichst einfache Weise hergestellt werden können.

Demgemäß wurden die eingangs definierten neuen Propylen-Ethylen-Copolymerisate gefunden.

Das zu diesen Copolymerisaten führende Verfahren kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate gut bewährt haben. Als besonders bevorzugter Träger wird Siliciumdioxid oder ein Aluminiumsilicat der Formel $SiO_2 \cdot aAl_2O_3$ verwendet, wobei a für einen Wert von 0,001 bis 2, insbesondere von 0,01 bis 0,5, steht.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-($C_1$-$C_{10}$-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I

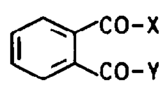 I

verwendet, wobei X und Y jeweils für ein Chloratom oder einen $C_1$- bis $C_{10}$-Alkoxyrest oder gemeinsam für Sauerstoff stehen. Besonders bevorzugte Elektronendonorverbindungen sind Phthalsäureester, wobei X und Y einen $C_1$-$C_8$-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner $C_6$- bis $C_{10}$-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 48 57 613 beschrieben.

Bei der Herstellung der titanhaltigen Feststoffkomponente wird bevorzugt folgendes dreistufige Verfahren angewandt:

In der ersten Stufe versetzt man zunächst einen feinteiligen Träger, bevorzugt Siliciumdioxid oder ein Aluminiumsilicat der Formel $SiO_2 \cdot aAl_2O_3$ - wobei a für eine Zahl im Bereich von 0,001 bis 2, insbesondere im Bereich von 0,01 bis 0,5 steht - der in der Regel einen Teilchendurchmesser von 0,1 bis 1000 µm, insbesondere von 10 bis 300 µm, ein Porenvolumen von 0,1 bis 10 $cm^3/g$, insbesondere von 1,0 bis 4,0 $cm^3/g$, und eine spezifische Oberfläche von 10 bis 1000 $m^2/g$, insbesondere von 100 bis 500 $m^2/g$, aufweist, mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein $C_1$- bis $C_8$-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommen dabei Aluminiumverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel II

$$R^1_nSi(OR^2)_{4-n} \quad II.$$

wobei
$R^1$ gleich oder verschieden ist und eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe bedeutet, $R^2$ gleich oder verschieden ist und eine $C_1$- bis $C_{20}$-Alkylgruppe bedeutet und n für die Zahlen 1, 2 oder 3 steht. Besonders bevorzugt werden dabei solche Verbindungen, in denen $R^1$ gleich oder verschieden ist und eine $C_1$- bis $C_8$-Alkylgruppe oder eine 5- bis 7-gliedrige Cycloalkylgruppe, sowie $R^2$ gleich oder verschieden ist und eine $C_1$- bis $C_4$-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Die Herstellung der erfindungsgemäßen Propylen-Ethylen-Copolymerisate erfolgt insbesondere nach einem dreistufigen Verfahren.

In der ersten Polymerisationsstufe wird dabei bei einem Druck von 20 bis 40 bar, einer Temperatur von 60 bis 90°C und einer mittleren Verweilzeit des Reaktionsgemisches von 0,5 bis 5 Stunden Propylen polymerisiert. Bevorzugt sind dabei Drücke von 20 bis 35 bar, Temperaturen von 65 bis 85°C und mittlere Verweilzeiten von 0,75 bis 4 Stunden. Üblicherweise wählt man die Reaktionsbedingungen so, daß in der ersten Polymerisationsstufe pro mmol der Aluminiumkomponente 0,05 bis 2 kg, bevorzugt 0,1 bis 1,5 kg, Polypropylen gebildet werden.

Nach einer speziellen Ausführungsform des zu den erfindungsgemäßen Propylen-Ethylen-Copolymerisaten führenden Verfahrens kann das Monomerengemisch der ersten Polymerisationsstufe noch in geringem Umfang weitere $C_2$-$C_{10}$-Alk-1-ene, beispielsweise Ethylen, But-1-en, Pent-1-en, Hex-1-en, Hept-1-en oder Oct-1-en enthalten. Die Menge dieser Comonomere ist dabei so zu begrenzen, daß das Partialdruckverhältnis zwischen dem weiteren $C_2$-$C_{10}$-Alk-1-en und dem Propylen nicht mehr als 1:100, insbesondere nicht mehr als 0,5:100 beträgt. Vorzugsweise wird auf die Mitverwendung der weiteren $C_2$-$C_{10}$-Alk-1-ene in der ersten Polymerisationsstufe ganz verzichtet.

Das Polypropylen wird nach Beendigung der Reaktion mit dem Katalysator aus der ersten Polymerisationsstufe in die zweite Polymerisationsstufe übergeführt, wo diesem ein Gemisch aus Propylen und Ethylen hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 8 bis 25 bar. Die Temperatur liegt bei 40 bis 110°C, bevorzugt bei 50 bis 90°C und die mittlere Verweilzeit des Polymerisats beträgt 0,2 bis 4 Stunden, bevorzugt 0,2 bis 2 Stunden.

In der zweiten Polymerisationsstufe liegt das Verhältnis der Partialdrücke zwischen Propylen und Ethylen üblicherweise im Bereich von 1:10 bis 10:1, insbesondere im Bereich von 1:8 bis 5:1. Durch geeignete Wahl der Reaktionsparameter ist ferner darauf zu achten, daß das Gewichtsverhältnis zwischen den in der ersten und den in der zweiten Polymerisationsstufe umgesetzten Monomeren 1:1 bis 20:1, insbesondere 1,5:1 bis 10:1, beträgt.

In einer weiteren Ausführungsform des zu den erfindungsgemäßen Copolymerisaten führenden Verfahrens fügt man dem Reaktionsgemisch der zweiten Polymerisationsstufe ein $C_1$- bis $C_8$-Alkanol, insbesondere ein $C_1$-$C_4$-Alkanol, hinzu, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol.

Das auf diese Weise erhältliche Gemisch aus Polypropylen und einem Propylen-Ethylen-Copolymerisat wird nach Beendigung der Reaktion mit dem Katalysator aus der zweiten Polymerisationsstufe in die dritte Polymerisationsstufe übergeführt, wo diesem Ethylen oder ein Gemisch aus Ethylen und Propylen hinzupolymerisiert wird. Der in dieser dritten Polymerisationsstufe vorherrschende Druck liegt üblicherweise 7 bar, bevorzugt 10 bar, unter dem der ersten Polymerisationsstufe und beträgt 5 bis 30, vorzugsweise 8 bis 25 bar. Die Temperatur liegt bei 40 bis 110°C, bevorzugt bei 50 bis 90°C und die mittlere Verweilzeit des Polymerisats beträgt 0,1 bis 5 Stunden, insbesondere 0,2 bis 4 Stunden. Wird in dieser dritten Polymerisationsstufe dem aus der zweiten Polymerisationsstufe erhaltenen Polymerisat ein Gemisch aus Ethylen und Propylen hinzupolymerisiert, so ist darauf zu achten, daß das Partialdruckverhältnis zwischen Ethylen und Propylen 0,5:1 bis 100:1, insbesondere 2:1 bis 80:1, beträgt. Erfindungsgemäß ist außerdem dafür Sorge zu tragen, daß das Gewichtsverhältnis zwischen den in den beiden ersten Polymerisationsstufen und den in der dritten Polymerisationsstufe umgesetzten Monomeren im Bereich von 1:2 bis 20:1, insbesondere im Bereich von 1:1,5 bis 10:1, liegt.

In einer weiteren Ausführungsform des zu den erfindungsgemäßen Copolymerisaten führenden Verfahrens fügt man dem Reaktionsgemisch der dritten Polymerisationsstufe ein $C_1$- bis $C_8$-Alkanol, insbesondere ein $C_1$-$C_4$-Alkanol, hinzu, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol.

Das ebenfalls erfindungsgemäße Verfahren kann sowohl in einem einzigen Reaktor, oder in einer Kaskade aus zwei, drei oder mehr hintereinander geschalteten Reaktoren durchgeführt werden. Verwendet man lediglich einen Reaktor, so wird nach jeder abgeschlossenen Polymerisationsstufe der Reaktor zunächst auf tiefere Drücke entspannt. Danach werden die für die neue Polymerisationsstufe benötigten Reaktionsparameter eingestellt, der Reaktionsraum mit Monomeren gefüllt und entsprechend neu polymerisiert. Bei einer Reihe von mehreren hintereinander geschalteten Reaktoren wird das gebildete Polymerisat nach dem Ende der Polymerisation aus der jeweiligen Polymerisationsstufe zusammen mit dem Katalysator ausgetragen und in die nächste Polymerisationsstufe übergeführt.

Das Molekulargewicht der dabei erhältlichen Polymerisate kann wie üblich durch Zugabe von Reglern, insbesondere von Wasserstoff kontrolliert werden.

Die erfindinngsgemäßen Propylen-Ethylen-Copolymerisate sind als Gemisch aus einem Propylenhomopolymerisat, einem Propylen-Ethylen-Copolymerisat mit einem Ethylengehalt von 20 bis 80 Gew.-% und einem Polyethylen, oder einem Ethylen-Propylen-Copolymerisat mit einem Ethylengehalt von mindestens 50 Gew.-% anzusehen. Ihre Schmelzflußindices betragen 0,1 bis 100 g/10 min, vorzugsweise 0,2 bis 20 g/10 min, jeweils gemessen nach DIN 53 735 bei 230°C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Die erfindungsgemäßen Copolymerisate weisen eine hohe Steifigkeit, eine hohe Schlagzähigkeit und eine verringerte Neigung zum Weißbruch auf. Sie können ohne großen verfahrenstechnischen Mehraufwand hergestellt werden.

Aufgrund ihrer guten mechanischen Eigenschaften eignen sich solche Copolymerisate insbesondere zur Herstellung von Folien, Rohren, Belägen, Fasern, Hohlkörpern, Spritzgußartikeln und von Formteilen für den Fahrzeugbau.

## Beispiele

Alle Beispiele wurden in einem Rührautoklaven mit einem Nutzvolumen von 10 l durchgeführt, welcher ein bewegtes Festbett aus feinteiligem Polypropylen enthielt.

In der ersten Polymerisationsstufe wurde in Anwesenheit von 7,1 l Wasserstoff als Molmassenregler Propylen mit Hilfe eines Ziegler-Natta-Katalysatorsystems polymerisiert. Die genauen Reaktionsbedingungen, also Druck, Temperatur und die mittlere Verweilzeit des Reaktionsgemisches können der nachfolgenden Tabelle 1 entnommen werden.

In allen Beispielen wurden, bezogen auf eine Stunde mittlerer Verweilzeit des Reaktionsgemisches 100 mg einer titanhaltigen Feststoffkomponente, 6 mmol Triethylaluminium und 0,6 mmol Dimethoxyisobutylisopropylsilan als Katalysatorkomponenten verwendet. Dabei wurden pro mmol der Aluminiumkomponente 0,2 kg Polypropylen erzeugt. Die titanhaltige Feststoffkomponente wurde nach folgendem Verfahren hergestellt.

Dazu versetzte man in einer ersten Stufe $SiO_2$, welches einen Teilchendurchmesser von 20 bis 45 µm, ein Porenvolumen von 1,75 $cm^3/g$ und eine Oberfläche von 320 $m^2/g$ aufwies, mit in n-Heptan gelöstem Butyl-octylmagnesium, wobei pro Mol $SiO_2$ 0,3 mol der Magnesiumverbindung eingesetzt wurden. Die Lösung wurde 1,5 Stunden lang bei

90°C gerührt, danach auf 20°C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurden unter ständigem Rühren 3 mol Ethanol, bezogen auf 1 mol Magnesium hinzugefügt. Dieses Gemisch wurde 1,5 Stunden bei 80°C gerührt und danach mit 6 mol Titantetrachlorid und 0,5 mol Phthalsäure-di-n-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125°C mit einer 15 gewichtsprozentigen Lösung von Titantetrachlorid in Ethylbenzol.

Danach wurde das Festprodukt durch Filtration vom Extraktionsmittel getrennt und solange mit n-Heptan gewaschen, bis dieses nur mehr 0,3 Gew.-% Titantetrachlorid enthielt.

Die daraus resultierende titanhaltige Feststoffkomponente enthielt 3,1 Gew.-% Titan, 7,5 Gew.-% Magnesium und 28,3 Gew.-% Chlor.

Nach Beendigung der ersten Polymerisationsstufe wurde der Rührautoklav in allen Beispielen jeweils auf 5 bar entspannt und anschließend wurde darin unter den in der Tabelle 1 für die zweite Polymerisationsstufe angegebenen Bedingungen ein Gemisch aus Propylen und Ethylen polymerisiert. Das in der ersten Polymerisationsstufe gebildete Polypropylen verblieb dabei zusammen mit dem Ziegler-Natta-Katalysator im Rührautoklaven.

Nach Beendigung der Copolymerisation wurde der Rührautoklav in allen Beispielen jeweils wieder auf 5 bar entspannt und anschließend wurde darin unter den in der Tabelle 1 für die dritte Polymerisationsstufe angegebenen Bedingungen erneut ein Gemisch aus Propylen und Ethylen polymerisiert. Die in den beiden ersten Polymerisationsstufen gebildeten Polymerisate verblieben dabei zusammen mit dem Ziegler-Natta-Katalysator im Rührautoklaven.

Die Eigenschaften der in allen Beispielen erhaltenen Propylen-Ethylen-Copolymerisate können der nachfolgenden Tabelle 2 entnommen werden.

Tabelle 1

| Reaktionsbedingungen in den drei Polymerisationsstufen | | | |
|---|---|---|---|
| | Beispiele | | |
| Polymerisationsstufe 1 | 1 | 2 | 3 |
| Druck [bar] | 28 | 28 | 28 |
| Temperatur [°C] | 70 | 70 | 70 |
| mittlere Verweilzeit [Stunde] | 1 | 1 | 1 |
| Polymerisationsstufe 2 | | | |
| Druck [bar] | 10 | 10 | 10 |
| Temperatur [°C] | 70 | 70 | 70 |
| mittlere Verweilzeit [Stunde] | 0,5 | 0,5 | 0,5 |
| Partialdruckverhältnis Propylen:Ethylen | 1:2 | 1:2 | 1:2 |
| Gewichtsverhältnis umgesetzte Monomere in der ersten Polymerisationsstufe: umgesetzte Monomere in der zweiten Polymerisationsstufe | 4:1 | 4:1 | 4:1 |
| Polymerisationsstufe 3 | | | |
| Druck [bar] | 10 | 10 | 10 |
| Temperatur [°C] | 70 | 70 | 70 |
| mittlere Verweilzeit [Stunde] | 0,33 | 0,75 | 1,75 |
| Partialdruckverhältnis Propylen:Ethylen | 1:9 | 1:9 | 1:9 |
| Gewichtsverhältnis umgesetzte Monomere in den beiden ersten Polymerisationsstufen : umgesetzte Monomere in der dritten Polymerisationsstufe | 5,6:1 | 2,2:1 | 1:1 |

Tabelle 2

Eigenschaften der erhaltenen Propylen-Ethylen-Copolymerisate

| | Beispiele | | |
|---|---|---|---|
| | 1 | 2 | 3 |
| Schmelzflußindex[a)] [g/10 min] | | | |
| nach der ersten Stufe | 5,5 | 2,7 | 1,2 |
| nach der zweiten Stufe | 5,6 | 2,8 | 1,0 |
| nach der dritten Stufe | 5,3 | 2,6 | <1,0 |
| Steifigkeit (Schubmodul)[b] [$N/mm^2$] | 350 | 275 | 160 |
| Schlagzähigkeit[c)] [$kJ/m^2$] | ohne Bruch | ohne Bruch | ohne Bruch |
| Kerbschlagzähigkeit[d)] [$kJ/m^2$] | 9 | 14 | 100 % angebrochen |
| Weißbruch[e)] [mm] | 13 | 0 | 0 |

a) bei 230°C und 2,16 kg, nach DIN 53 735
b) nach DIN 53 445
c) nach DIN 53 453, bei -40°C
d) nach DIN 53 453, bei -40°C
e) bei 23°C,

Bestimmung des Weißbruchs:

Der Weißbruch wurde mit Hilfe einer Fallbolzenapparatur nach DIN 53 443 Teil 1 ermittelt, wobei ein Fallbolzen mit einer Masse von 250 g, einem Stoßkörper mit 5 mm Durchmesser und einem Kalottenradius von 25 mm verwendet wurde. Die Fallhöhe betrug 50 cm.

Als Probekörper wurde eine spritzgegossene Rundscheibe mit einem Durchmesser von 60 mm und einer Dicke von 2 mm verwendet. Der Probekörper wurde bei einer Massetemperatur von 250°C und einer Werkzeugoberflächentemperatur von 30°C spritzgegossen.

Die Prüfung erfolgte bei einer Temperatur von 23°C, wobei jeder Probekörper nur jeweils einem Stoßversuch unterworfen wurde. Dabei wurde zunächst der Probekörper auf einen Auflagering gelegt, ohne daß dieser eingespannt wurde, und anschließend wurde der Fallbolzen ausgelöst. Zur Mittelwertbildung wurden jeweils 5 Probekörper geprüft.

Der Durchmesser der sichtbaren Weißbruchmarkierung ist in mm angegeben und wurde dadurch ermittelt, daß man diesen auf der dem Stoß abgewandten Seite der Rundscheibe in Fließrichtung und senkrecht dazu maß und aus beiden Werten den Mittelwert bestimmte.

**Patentansprüche**

1. Propylen-Ethylen-Copolymerisate, erhältlich durch dreistufige Polymerisation aus der Gasphase heraus in einem

bewegten Festbett, mittels eines Ziegler-Natta-Katalysatorsystems, das neben einer titanhaltigen Feststoffkomponente noch als Cokatalysator eine Aluminiumverbindung enthält, wobei man

in einer ersten Polymerisationsstufe bei einem Druck von 20 bis 40 bar, einer Temperatur von 60 bis 90°C und einer mittleren Verweilzeit des Reaktionsgemisches von 0,5 bis 5 Stunden Propylen polymerisiert, danach

in einer zweiten Polymerisationsstufe bei einem Druck von 5 bis 30 bar, wobei dieser Druck wenigstens 7 bar unter dem Druck der ersten Polymerisationsstufe liegt, einer Temperatur von 40 bis 110°C und einer mittleren Verweilzeit des Reaktionsgemisches von 0,2 bis 4 Stunden dem aus der ersten Polymerisationsstufe erhaltenen Polymerisat ein Gemisch aus Propylen und Ethylen hinzupolymerisiert und anschließend

in einer dritten Polymerisationsstufe bei einem Druck von 5 bis 30 bar, einer Temperatur von 40 bis 110°C und einer mittleren Verweilzeit des Reaktionsgemisches von 0,1 bis 5 Stunden dem aus der zweiten Polymerisationsstufe erhaltenen Polymerisat Ethylen oder ein Gemisch aus Ethylen und Propylen hinzupolymerisiert,

dabei das Gewichtsverhältnis zwischen den in der ersten und den in der zweiten Polymerisationsstufe umgesetzten Monomeren auf 1:1 bis 20:1 und das Gewichtsverhältnis zwischen den in den beiden ersten Polymerisationsstufen und den in der dritten Polymerisationsstufe umgesetzten Monomeren auf 1:2 bis 20:1 einstellt.

**2.** Propylen-Ethylen-Copolymerisate nach Anspruch 1, erhältlich nach einem Verfahren, wobei man in der zweiten Polymerisationsstufe dem aus der ersten Polymerisationsstufe erhaltenen Polymerisat ein Gemisch aus Propylen und Ethylen in solchen Anteilen hinzupolymerisiert, daß das Partialdruckverhältnis zwischen Propylen und Ethylen 1:10 bis 10:1 beträgt.

**3.** Propylen-Ethylen-Copolymerisate nach den Ansprüchen 1 oder 2, erhältlich nach einem Verfahren, wobei man in der dritten Polymerisationsstufe dem aus der zweiten Polymerisationsstufe erhaltenen Polymerisat ein Gemisch aus Ethylen und Propylen in solchen Anteilen hinzupolymerisiert, daß das Partialdruckverhältnis zwischen Ethylen und Propylen 0,5:1 bis 100:1 beträgt.

**4.** Propylen-Ethylen-Copolymerisate nach den Ansprüchen 1 bis 3, erhältlich nach einem Verfahren, wobei man das Gewichtsverhältnis zwischen den in der ersten und den in der zweiten Polymerisationsstufe umgesetzten Monomeren auf 1,5:1 bis 10:1 einstellt.

**5.** Propylen-Ethylen-Copolymerisate nach den Ansprüchen 1 bis 4, erhältlich nach einem Verfahren, wobei man das Gewichtsverhältnis zwischen den in den beiden ersten Polymerisationsstufen und den in der dritten Polymerisationsstufe umgesetzten Monomeren auf 1:1,5 bis 10:1 einstellt.

**6.** Verfahren zur Herstellung von Propylen-Ethylen-Copolymerisaten gemäß den Ansprüchen 1 bis 5 in einem bewegten Festbett, wobei man aus der Gasphase heraus zunächst in einer ersten Polymerisationsstufe bei einem Druck von 20 bis 40 bar, einer Temperatur von 60 bis 90°C und einer mittleren Verweilzeit des Reaktionsgemisches von 0,5 bis 5 Stunden, mit Hilfe eines Ziegler-Natta-Katalysatorsystems, das neben einer titanhaltigen Feststoffkomponente noch als Cokatalysator eine Aluminiumverbindung enthält, Propylen polymerisiert und in einer zweiten Polymerisationsstufe bei einem Druck von 5 bis 30 bar, wobei dieser Druck wenigstens 7 bar unter dem Druck der ersten Polymerisationsstufe liegt, einer Temperatur von 40 bis 110°C und einer mittleren Verweilzeit des Reaktionsgemisches von 0,2 bis 4 Stunden dem aus der ersten Polymerisationsstufe erhaltenen Polymerisat ein Gemisch aus Propylen und Ethylen hinzupolymerisiert, dadurch gekennzeichnet, daß man anschließend in einer dritten Polymerisationsstufe bei einem Druck-von 5 bis 30 bar, einer Temperatur von 40 bis 110°C und einer mittleren Verweilzeit des Reaktionsgemisches von 0,1 bis 5 Stunden dem aus der zweiten Polymerisationsstufe erhaltenen Polymerisat Ethylen oder ein Gemisch aus Ethylen und Propylen hinzupolymerisiert, dabei das Gewichtsverhältnis zwischen den in der ersten und den in der zweiten Polymerisationsstufe umgesetzten Monomeren auf 1:1 bis 20:1 und das Gewichtsverhältnis zwischen den in den beiden ersten Polymerisationsstufen und den in der dritten Polymerisationsstufe umgesetzten Monomeren auf 1:2 bis 20:1 einstellt.

## Claims

**1.** A propylene-ethylene copolymer obtainable by three-step polymerization from the gas phase in an agitated fixed bed by means of a Ziegler-Natta catalyst system which, in addition to a titanium-containing solid component, also

contains, as cocatalyst, an aluminum compound, where,

in a first polymerization step, propylene is polymerized at from 60 to 90°C and at from 20 to 40 bar and at a mean residence time of the reaction mixture of from 0.5 to 5 hours, then,
in a second polymerization step, a mixture of propylene and ethylene is polymerized onto the polymer obtained from the first polymerization step at from 40 to 110°C and from 5 to 30 bar, this pressure being at least 7 bar below the pressure in the first polymerization step, and at a mean residence time of the reaction mixture of from 0.2 to 4 hours, and then,
in a third polymerization step, ethylene or a mixture of ethylene and propylene is polymerized onto the polymer obtained from the second polymerization step at from 40 to 110°C and from 5 to 30 bar and at a mean residence time of the reaction mixture of from 0.1 to 5 hours,
the weight ratio between the monomers reacted in the first and second polymerization steps being adjusted to from 1:1 to 20:1 and the weight ratio between the monomers reacted in the first two polymerization steps and those reacted in the third polymerization step being adjusted to from 1:2 to 20:1.

**2.** A propylene-ethylene copolymer as claimed in claim 1, obtainable by a process in which, in the second polymerization step, a mixture of propylene and ethylene in such proportions that the partial pressure ratio between propylene and ethylene is from 1:10 to 10:1 is polymerized onto the polymer obtained from the first polymerization step.

**3.** A propylene-ethylene copolymer as claimed in claim 1 or 2, obtainable by a process in which, in the third polymerization step, a mixture of ethylene and propylene in such proportions that the partial pressure ratio between ethylene and propylene is from 0.5:1 to 100:1 is polymerized onto the polymer obtained from the second polymerization step.

**4.** A propylene-ethylene copolymer as claimed in claim 1 or 2 or 3, obtainable by a process in which the weight ratio between the monomers reacted in the first and second polymerization steps is adjusted to from 1.5:1 to 10:1.

**5.** A propylene-ethylene copolymer as claimed in claim 1 or 2 or 3 or 4, obtainable by a process in which the weight ratio between the monomers reacted in the first two polymerization steps and those reacted in the third polymerization step is adjusted to from 1:1.5 to 10:1.

**6.** A process for the preparation of a propylene-ethylene copolymer as claimed in claim 1 or 2 or 3 or 4 or 5 in an agitated fixed bed from the gas phase, in which, in a first polymerization step, propylene is polymerized at from 60 to 90°C and from 20 to 40 bar and at a mean residence time of the reaction mixture of from 0.5 to 5 hours with the aid of a Ziegler-Natta catalyst system which, in addition to a titanium-containing solid component, also contains, as cocatalyst, an aluminum compound, and, in a second polymerization step, a mixture of propylene and ethylene is polymerized onto the polymer obtained in the first polymerization step at from 40 to 110°C and from 5 to 30 bar, this pressure being at least 7 bar below the pressure in the first polymerization step, and at a mean residence time of the reaction mixture of from 0.2 to 4 hours, which comprises subsequently, in a third polymerization step, polymerizing ethylene or a mixture of ethylene and propylene onto the polymer obtained from the second polymerization step at from 40 to 110°C and at from 5 to 30 bar and at a mean residence time of the reaction mixture of from 0.1 to 5 hours, the weight ratio between the monomers reacted in the first and second polymerization steps being adjusted to from 1:1 to 20:1 and the weight ratio between the monomers reacted in the first two polymerization steps and those reacted in the third polymerization step being adjusted to from 1:2 to 20:1.

## Revendications

**1.** Copolymères propylène/éthylène, obtenus par polymérisation en trois étapes en phase gazeuse dans un lit de matière solide mis en mouvement, au moyen d'un système catalytique de Ziegler-Natta qui contient en tant que co-catalyseur, en plus d'un composant solide contenant du titane, un composé de l'aluminium,

du propylène étant polymérisé, dans une première étape de polymérisation, sous une pression de 20 à 40 bar, à une température de 60 à 90°C et avec une durée de séjour moyenne du mélange réactionnel de 0,5 à 5 h, après quoi,
dans une deuxième étape de polymérisation, un mélange de propylène et d'éthylène étant polymérisé additionnellement sur le polymère obtenu dans la première étape de polymérisation, sous une pression de 5 à 30 bar, cette pression étant inférieure d'au moins 7 bar à la pression de la première étape de polymérisation, à une température de 40 à 110°C et avec une durée de séjour moyenne du mélange réactionnel de 0,2 à 4 h, puis,

dans une troisième étape de polymérisation, de l'éthylène ou un mélange d'éthylène et de propylène étant polymérisé additionnellement sur le polymère obtenu dans la deuxième étape de polymérisation, sous une pression de 5 à 30 bar, à une température de 40 à 110°C et avec une durée de séjour moyenne du mélange réactionnel de 0,1 à 5 h,
le rapport pondéral entre les monomères mis en réaction dans les première et deuxième étapes de polymérisation étant réglé entre 1:1 et 20:1 et le rapport pondéral entre les monomères mis en réaction dans les deux premières étapes de polymérisation et dans la troisième étape de polymérisation étant réglé entre 1:2 et 20:1.

**2.** Copolymères propylène/éthylène selon la revendication 1, obtenus par un procédé dans lequel, dans la deuxième étape de polymérisation, on polymérise additionnellement, sur le polymère obtenu dans la première étape de polymérisation, un mélange de propylène et d'éthylène dans des proportions telles que le rapport des pressions partielles entre le propylène et l'éthylène soit compris entre 1:10 et 10:1.

**3.** Copolymères propylène/éthylène selon la revendication 1 ou 2, obtenus par un procédé dans lequel, dans la troisième étape de polymérisation, on polymérise additionnellement, sur le polymère obtenu dans la deuxième étape de polymérisation, un mélange d'éthylène et de propylène dans des proportions telles que le rapport des pressions partielles entre l'éthylène et le propylène soit compris entre 0,5:1 et 100:1.

**4.** Copolymères propylène/éthylène selon l'une quelconque des revendications 1 à 3, obtenus par un procédé dans lequel on règle à une valeur comprise entre 1,5:1 et 10:1 le rapport pondéral entre les monomères mis en réaction dans les première et deuxième étapes de polymérisation.

**5.** Copolymères propylène/éthylène selon l'une quelconque des revendications 1 à 4, obtenus par un procédé dans lequel on règle à une valeur comprise entre 1:1,5 et 10:1 le rapport pondéral entre les monomères mis en réaction dans les deux premières étapes de polymérisation et dans la troisième étape de polymérisation.

**6.** Procédé de préparation de copolymères propylène/éthylène selon l'une quelconque des revendications 1 à 5 dans un lit de matière solide mis en mouvement, dans lequel, dans une première étape de polymérisation, on commence par polymériser du propylène sous une pression de 20 à 40 bar, à une température de 60 à 90°C et avec une durée de séjour moyenne du mélange réactionnel de 0,5 à 5 h, à l'aide d'un système catalytique de Ziegler-Natta qui contient comme cocatalyseur, en plus d'un composant solide contenant du titane, un composé de l'aluminium et, dans une deuxième étape de polymérisation, on polymérise additionnellement un mélange de propylène et d'éthylène sur le polymère obtenu dans la première étape de polymérisation, sous une pression de 5 à 30 bar, cette pression étant inférieure d'au moins 7 bar à la pression de la première étape de polymérisation, à une température de 40 à 110°C et avec une durée de séjour moyenne du mélange réactionnel de 0,2 à 4 h, caractérisé en ce que, dans une troisième étape de polymérisation, on polymérise ensuite additionnellement de l'éthylène ou un mélange d'éthylène et de propylème sur le polymère obtenu dans la deuxième étape de polymérisation, sous une pression de 5 à 30 bar, à une température de 40 à 110°C et avec une durée de séjour moyenne du mélange réactionnel de 0,1 à 5 h, le rapport pondéral entre les monomères mis en réaction dans les première et deuxième étapes de polymérisation étant réglé entre 1:1 et 20:1 et le rapport pondéral entre les monomères mis en réaction dans les deux premières étapes de polymérisation et dans la troisième étape de polymérisation étant réglé entre 1:2 et 20:1.